Europäisches Patentamt

European Patent Office

Office européen des brevets

(19)

(11) Publication number: **0 443 646 A1**

# EUROPEAN PATENT APPLICATION

(12)

(21) Application number: 91200175.7

(22) Date of filing: 29.01.91

(51) Int. Cl.⁵: **B23K 26/08**

(30) Priority: 30.01.90 NL 9000224

(43) Date of publication of application:
**28.08.91 Bulletin 91/35**

(84) Designated Contracting States:
**CH DE DK ES FR GB IT LI NL SE**

(71) Applicant: **B.V. MACHINEFABRIEK H.H. DRENT**
**Hallseweg 21**
**NL-6964 AJ Eerbeek(NL)**

(72) Inventor: **Schoonman, Adelbert**
**Voorsterweg 64**
**6971 KB Brummen(NL)**
Inventor: **Koenders, Antonius, Bernardus,**
**Theresia, Marie**
**Gildebongerd 65a**
**7038 DB Zeddam(NL)**

(74) Representative: **Lips, Hendrik Jan George, Ir.**
**et al**
**HAAGSCH OCTROOIBUREAU Breitnerlaan**
**146**
**NL-2596 HG Den Haag(NL)**

(54) Method and device for either cutting or perforating a moving web of paper.

(57) Method and device for cutting or perforating a moving web (2) of paper or such like material by using a laser beam (5) which by means of a pivotable or rotatable positioned laser optics (6) is moved over the web (2), said web (2), at the place where the laser beam (5) is moving over it, being brought into such a shape that the distance between the laser optics (6) and the moving web (2) is substantially constant at every moment.

FIG. 1

## METHOD AND DEVICE FOR EITHER CUTTING OR PERFORATING A MOVING WEB OF PAPER.

In first instance the invention relates to a method for either cutting or perforating a moving web of paper or such like material making use of a laser beam, which by means of a pivotable or rotatable positioned laser optics is moved over the web of paper.

Such a method is known by DE-A-2,458,656. The disadvantage of this method is, that the distance between the laser optics and the web of paper is continuously changing when the laser beam is moving transverse over the web of paper. This means that during this movement only one single point of the web of paper can be present in the focus of the laser beam. So the energy present in the laser beam will be dispersed over a given surface of the web of paper during the greatest part of its movement over this. Because of this a laser beam with a relatively high energy will have to be used to obtain the desired effect. This requires such a big generating device that the known method can be applied in very special cases only.

A further disadvantage is, that the laser beam will form a spot on the paper with relatively large dimensions during the greatest part of its path. This is particularly undesirable when applying a perforation in the web of paper, while when cutting the web of paper no clear straight line will be obtained.

Although it might be tried to focus the laser beam such that the web of paper is always present in the focus of the laser beam, this appears hardly to be possible in praxis because this might bring with it that relatively large masses have to be moved quickly.

Now the object of the invention is to remove these disadvantages and to that end it is provided that the web of paper, at the position where said laser beam is moved over it, is brought into such a shape that the distance between the laser optics and the moving web of paper is substantially constant at every moment.

In this way it is obtained that the web of paper will nearly always be present in the focus of the laser beam when this beam is moving over it, such that an optimum efficiency of the laser beam is obtained.

The invention also relates to a device for applying the above described method, said device comprising means for guiding of the web of paper which has to be either cut or perforated, a laser optics positioned at a distance of the web of paper by which a laser beam can be directed onto the web of paper and means for moving the laser optics in such a way that the laser beam will follow a path directed transverse over the moving web of paper, said device being characterized in that a means is present to bring the web of paper, at least at a position where the laser beam is moving over it, into such a shape that the distance between the laser optics and the web of paper is substantially constant.

Although in the following there is always spoken of a web of paper, it will be possible, as already said before, to use the method and device also for moving webs of another material.

According to a further embodiment of the invention the means for guiding the web of paper according the desired path may be shaped by a plate being curved in the direction of movement of the web of paper and which is positioned between the laser optics and the web of paper, such that the web of paper is moving along a convex section of said plate, a slot being provided in said plate for having passed the laser beam to the web of paper.

This gives a simple device which, however, when handling given types of paper, might bring the objection with it that the web of paper is subjected to friction when the web of paper is moving along the surface of the guiding plate. This might have a disadvantageous influence on the characteristics of the paper in particular in case of considerable velocities of the web of paper.

In view of this the means for guiding the web of paper according to the desired path may be shaped by nozzles by means of which jets of air are created being directed towards the web of paper and/or are directed away from this.

When the jets of air are directed towards the web of paper this means that air from the nozzles is blown against the web of paper and that the nozzles are positioned between the web of paper and the laser optics. When the nozzles are positioned at the other side of the web of paper air will be exhausted via the nozzles and the web of paper will be sucked towards the nozzles. It is known that in the last case the effect of the underpressure generated by the nozzles is smaller.

According to a further embodiment of the invention rollers might be provided for guiding the web of paper at that side of the web of paper opposite to the laser optics.

In that case e.g. it might be possible to refrain from the installation of nozzles through which air can be exhausted.

To make the friction between the web of paper and the rollers against which the web of paper is pressed by the jets of air as low as possible, said rollers can be driven with a circumferential velocity being substantially equal to the velocity of the web of paper.

According to still a further embodiment of the invention the means for guiding the web of paper according to the desired path may be shaped by rollers either being driven or not and being positioned such that the web of paper will follow the desired path under the influence of its own weight. In this case obviously it will be desirable that the web of paper is mainly present in a horizontal plane at that place where the device according to the invention is positioned.

It can be remarked that FR-A-2,352,642 is showing a device in which a web of paper, which has to be perforated, is brought into the shape of a cylinder, in the axis of which is placed a rotating mirror by which a laser beam is directed onto the paper. Between the paper and the mirror a reflecting ring is present being provided with openings. By this it is obtained that the distance between the mirror and the paper which has to be perforated, is always constant but this device cannot be used to make only one straight line of perforations transverse to the direction of movement of the web of paper.

Now the invention is described by means of embodiments, shown in the drawing, in which:

Fig. 1 schematically shows a side view of a device according to the invention;

Fig. 2 shows a plan view of the device of Fig. 1;

Fig. 3 shows a rear view of the device of Fig. 1;

Fig. 4 schematically shows a side view of another embodiment of the device according to the invention;

Fig. 5 shows a rear view of the device of Fig. 4; and

Fig. 6 schematically shows a further embodiment of the device according to the invention.

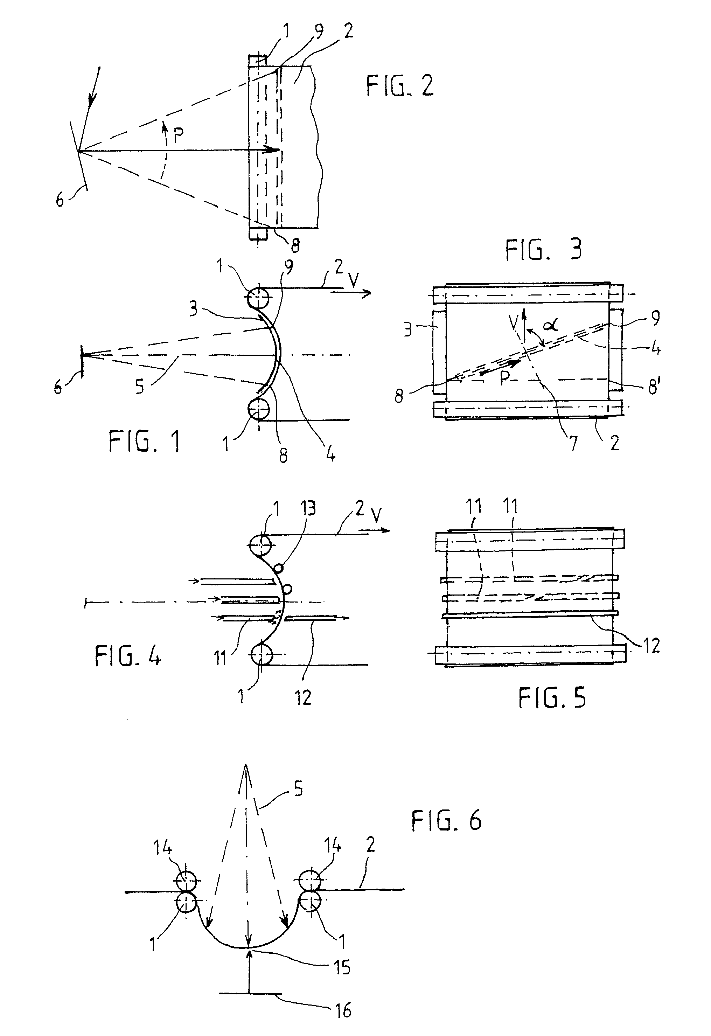

The device shown in the Figs. 1 - 3 comprises the deflection rollers 1 over which the web 2 of paper is guided which between the deflection rollers 1 is guided by the curved guiding plate 3 in which the slot 4 is present.

As in particular appears from Fig. 3 the slot 4 is making an angle α with the direction of movement V of the web 2 of paper.

The slot 4 is positioned in the guiding plate 3 in such a way that through the slot 4 a laser beam 5 can be directed originating of the laser optics 6.

The laser optics 6 is rotatable around the shaft 7, indicated in Fig. 3, such that the laser beam will move over the web of paper in the direction of the arrow P, to wit from the point 8 of the web 2 to the point 9 of this. The velocity of the movement of the web 2 in the direction of the arrow V is such that the point 8' of the web 2, lying opposite the point 8, will just have been arrived in the point 9 when also the laser beam 5 is arriving there. In this way the web of paper is cut according to the line 8-8'. According to this line also a perforation can be applied in the web of paper when the laser beam 5 is interrupted at the appropriate points of time.

Also the possibility exists that the web of paper is provided with an incision extending till a small distance from the side edges of the web of paper. By this the cohesion of the web of paper can be maintained temporarily and the web of paper can be divided into the desired parts at a further suitable place.

The shape of the guiding plate 3 will be chosen such that the distance between the laser optics 6 and the web 2 of paper is substantially equal at each moment during the pivoting of the laser optics 6 and so equal to the distance between the laser optics 6 and the points 8 and 9 of the web 2 of paper.

It can be remarked that for the sake of clearness the plate 3 is shown in Fig. 1 at some distance from the web 2 of paper but it will be obvious that the web 2 will always be pressed against the guiding plate 3.

The Figs. 4 and 5 schematically show an embodiment in which no use is made of a guiding plate but from a number of nozzles 11 from which air is blown against the web 2 of paper. The web of paper again is guided over the deflection rollers 1.

As in particular appears from Fig. 5 the nozzles 11 are locally interrupted for letting pass the laser beam 5.

Obviously a means will be present to control the pressure and/or the velocity with which the air is leaving the nozzles 11, such that the web 2 of paper will follow its ideal path as well as possible.

At the other side of the web of paper suck nozzles 12, if any, can be positioned either guiding rollers 13, which may be driven such, that its circumferential velocity mainly corresponds with the velocity V of the web 2 of paper.

Fig. 6 shows still the possibility that the web 2 of paper is guided in such a way along the laser beam 5, that the web of paper, between the deflection rollers 1, will follow the desired path as well as possible by its own weight. In this case the deflection rollers 1 may cooperate with rollers 14 in such a way that between both rollers 1 the web of paper will just sag down till the point 15. To detect this point 15 e.g. use can be made of a fixedly positioned, not mechanical working, distance measuring device 16.

Although in what is said above it was supposed that the web 2 of paper has to be cut either perforated square to its longitudinal direction, said cutting or perforation line also may run obliquely over the web of paper. This will be the case when the velocity V of the web of paper is chosen such that the point 8' of the web of paper, indicated in Fig. 3, will not be present in the point 9 when the laser beam is arriving there.

Further it will be obvious that only some possible embodiments of the device according to the invention are shown in the drawing and are described above and that many modifications can be applied without leaving the inventive concept.

**Claims**

1. Method for either cutting or perforating a moving web of paper or such like material, making use of a laser beam (5), which by means of a pivotable or rotatable positioned laser optics (6) is moved over the web (2) of paper, characterized in that the web (2) of paper, at the position where said laser beam (5) is moved over it, is brought into such a shape that the distance between the laser optics (6) and the moving web (2) of paper is substantially constant at every moment.

2. Device for applying the method according to claim 1, said device comprising means for guiding of the web (2) of paper which has to be either cut or perforated, a laser optics (6) positioned at a distance of the web (2) of paper by which a laser beam (5) can be directed onto the web of paper and means for moving the laser optics (6) in such a way that the laser beam (5) will follow a path directed transverse over the moving web (2) of paper, characterized in that a means (1,3,11,12,13,16) is present to bring the web (2) of paper, at least at the position where the laser beam (5) is moving over it, into such a shape that the distance between the laser optics (6) and the web (2) of paper is substantially constant.

3. Device according to claim 2, characterized in that the means for guiding the web (2) of paper according to the desired path is shaped by a plate (3) being curved in the direction of movement (V) of the web (2) of paper and which is positioned between the laser optics (6) and the web (2) of paper, such that the web (2) of paper is moving along a convex section of said plate (3), a slot (4) being provided in said plate for having passed the laser beam (5) to the web (2) of paper.

4. Device according to claim 2, characterized in that the means for guiding the web (2) of paper according to the desired path is shaped by nozzles (11,12) by means of which jets of air are created being directed towards the web (2) of paper and/or are directed away from this.

5. Device according to claim 4, characterized in that for guiding the web (2) of paper rollers (13) are provided at that side of the web (2) of paper being opposite to the laser optics (6).

6. Device according to claim 5, characterized in that the rollers (13) against which the web (2) of paper are pressed by means of the jets of air, are driven with a circumferential velocity being substantially equal to the velocity (V) of the web (2) of paper.

7. Device according to claim 2, characterized in that the means for guiding the web (2) of paper according to the desired path is shaped by rollers (1,14) either being driven or not and being positioned such that the web (2) of paper will follow the desired path under the influence of its own weight.

FIG. 2

FIG. 3

FIG. 1

FIG. 4

FIG. 5

FIG. 6

European
Patent Office

**EUROPEAN SEARCH
REPORT**

Application Number

**EP 91 20 0175**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 329 438 (THE WIGGINS TEAPE GROUP LIMITED) * the whole document * | 1-3 | B 23 K 26/08 |
| X | FR-A-2 352 642 (SOCIETE JOB, ANCIENS ETABLISSEMENTS BARDOU-JOB ET PAUILHAC) * the whole document * | 1 | |
| A | GB-A-2 094 211 (HAUNI-WERKE KORBER AND CO.) * page 5, lines 107 - 120; figures 3, 4 * | 1,2,4,5,7 | |
| A,D | DE-A-2 458 656 (SIEMENS AG) | | |

|  |
|---|
| TECHNICAL FIELDS SEARCHED (Int. Cl.5) |
| B 23 K |

The present search report has been drawn up for all claims

| Place of search | Date of completion of search | Examiner |
|---|---|---|
| The Hague | 07 May 91 | ARAN D.D. |